# EUROPÄISCHE PATENTSCHRIFT

(11) **EP 0 534 236 B1**
(45) Veröffentlichungstag und Bekanntmachung des Hinweises auf die Patenterteilung: **06.12.1995**
(21) Anmeldenummer: 92115459.7
(22) Anmeldetag: 10.09.1992
(51) Int. Cl.: C08F 220/14, C08L 33/12, C08L 51/00, C08F 220/12

(54) **PMMA-Formmassen mit erhöhter Wärmeformbeständigkeit**
Moulding compositions of polymethylmethacrylate with high heat resistance
Masses de moulage en polyméthyl méthacrylate à haute résistance à la chaleur

(30) Priorität: 24.09.1991 DE 4131730
(43) Veröffentlichungstag der Anmeldung: 31.03.1993
(73) Patentinhaber: BASF Aktiengesellschaft, 67063 Ludwigshafen (DE)
(72) Erfinder: Besecke, Siegmund, Dr., p.A. Erich Besecke, W-3250 Hameln (DE); Lauke, Harald, Dr., W-6800 Mannheim 1 (DE); Deckers, Andreas, Dr., W-6700 Ludwigshafen (DE)

(56) Entgegenhaltungen:
- CHEMICAL ABSTRACTS, vol. 114, no. 6, 11. Februar 1991, Columbus, Ohio, US; abstract no. 43775, 'MANUFACTURE OF ACRYLIC ACID-ALKYL METHACRYLATE-BIS(2- ETHYLHEXYL) MALEATE COPOLYMER DISPERSIONS.'

## Beschreibung

Die vorliegende Erfindung betrifft Copolymerisate, auf der Basis von
A) 50 bis 94,49 Gew.-% einer Mischung aus
   a1) 100 bis 30 Gew.-% Methylmethacrylat und
   a2) 0 bis 70 Gew.-% Cyclohexylmethacrylat,
B) 0,5 bis 5 Gew.-% mindestens einer Verbindung, ausgewählt aus der Gruppe bestehend aus C₁-C₄-Alkylacrylat und C₅-C₈-Cycloalkylacrylat,
C) 5 bis 30 Gew.-% mindestens einer Verbindung, ausgewählt aus der Gruppe bestehend aus Fumarsäuredi-(C₁-C₆-alkyl)ester, Fumarsäuredi-(C₃-C₈-cycloalkyl)ester und Fumarsäure-C₁-C₆-alkyl-C₃-C₈-cycloalkylester, in denen die Cycloalkylgruppen jeweils bis zu dreifach mit C₁-C₄-Alkylgruppen substituiert sein können,
D) 0 bis 20 Gew.-% mindestens eines weiteren Comonomeren und
E) 0,01 bis 2 Gew.-% eines Übertragungsreglers.

Außerdem betrifft die Erfindung ein Verfahren zur Herstellung dieser Copolymerisate, ihre Verwendung zur Herstellung von Formkörpern, Formkörper aus diesen Copolymerisaten sowie thermoplastische Formmassen, enthaltend diese Copolymerisate und Pfropfcopolymerisate.

Copolymerisate auf Methacrylatbasis sind allgemein bekannt. Sie zeichnen sich durch ihre hohe Transparenz bei sehr guter Witterungsbeständigkeit aus. Jedoch weisen diese Polymethacrylat-("PMMA")-Formmassen für viele Anwendungen eine zu geringe Wärmeformbeständigkeit und eine zu hohe Wasseraufnahme auf. Man ist daher allgemein bestrebt, thermoplastische Formmassen herzustellen, die sowohl die günstigen Eigenschaften von PMMA wie eine hohe Transparenz und eine sehr gute Witterungsbeständigkeit als auch eine hohe Wärmeformbeständigkeit und eine nur geringe Wasseraufnahme aufweisen.

In der EP-B 97,948 werden Methacrylharze mit geringer Hygroskopizität beschrieben. Sie sind aufgebaut aus im wesentlichen Methylmethacrylat und den Comonomeren Cyclohexylmethacrylat und Methyl- oder Butylacrylat. Obwohl diese Polymerisate gute Eigenschaften hinsichtlich der Wasseraufnahme aufweisen, besitzen sie jedoch eine geringere Wärmeformbeständigkeit als reines PMMA.

In der EP-A 233,299 werden transparente Formmassen auf der Basis von Alkylestern der Fumarsäure beschrieben. Diese Formmassen können bis zu 30 Gew.-% andere Monomere wie Methylmethacrylat enthalten. Sie weisen eine hohe Wärmeformbeständigkeit auf, sind aber aufgrund ihrer stark vernetzten Struktur nicht mehr thermoplastisch verarbeitbar.

Eine ebenfalls hohe Wärmeformbeständigkeit, jedoch eine verringerte Witterungsbeständigkeit weisen die in den EP-A 124,273 und EP-A 264,590 beschriebenen Terpolymerisate, aufgebaut aus Methylmethacrylat, Maleinsäureanhydrid und Styrol, auf.

Aufgabe der vorliegenden Erfindung war es daher, Copolymerisate auf Basis von Methylmethacrylat mit verbesserter Wärmeformbeständigkeit und verringerter Wasseraufnahme bereitzustellen, ohne gleichzeitig die sonstigen Eigenschaften von PMMA-Formmassen wesentlich zu beeinträchtigen.

Demgemäß wurden die eingangs definierten Copolymerisate gefunden.

Des weiteren wurde ein Verfahren zu deren Herstellung, deren Verwendung zur Herstellung von Formkörpern, Formkörper aus diesen Copolymerisaten sowie thermoplastische Formmassen, enthaltend diese Copolymerisate und Pfropfcopolymerisate.

Als Komponente A) setzt man 50 bis 94,49 Gew.-% einer Mischung aus 100 bis 30, bevorzugt von 100 bis 50 Gew.-% Methylmethacrylat und 0 bis 70, bevorzugt von 0 bis 50 Gew.-% Cyclohexylmethacrylat ein.

Als Komponente B) verwendet man ein C₁-C₄-Alkylacrylat oder ein C₅-C₈-Cycloalkylacrylat oder ein Gemisch dieser Verbindungen in einer Menge im Bereich von 0,5 bis 5, bevorzugt von 0,5 bis 3 Gew.-%. Setzt man weniger als 0,5 Gew.-% Alkylacrylat ein, so geht dies im allgemeinen auf Kosten der Thermostabilität, bei mehr als 5 Gew.-% verringert sich in der Regel die Wärmeformbeständigkeit.

Als C₁-C₄-Alkylacrylat kommen Methylacrylat, Ethylacrylat, n-Propylacrylat, i-Propylacrylat, n-Butylacrylat, i-Butylacrylat, sek.-Butylacrylat und tert.-Butylacrylat in Betracht, vorzugsweise Methyl-, Ethyl- und n-Butylacrylat.

Als C₅-C₈-Cycloalkylacrylat kommen Cyclopentylacrylat, Cyclohexylacrylat, Cycloheptylacrylat und Cyclooctylacrylat, bevorzugt Cyclohexylacrylat in Betracht.

Als dritte Monomerkomponente C) setzt man 5 bis 30, vorzugsweise 10 bis 30 Gew.-% einer Verbindung ausgewählt aus der Gruppe bestehend aus Fumarsäuredi-(C₁-C₆-alkyl)ester, Fumarsäuredi-(C₃-C₈-cycloalkyl)ester und Fumarsäure-C₁-C₆-alkyl-C₃-C₈-cycloalkylester oder eine Mischung davon ein. Weniger als 5 Gew.-% an Fumarsäurester führen in der Regel zu keinen Verbesserungen hinsichtlich der Wärmeformbeständigkeit und Wasseraufnahme im Vergleich zu üblichen PMMA-Formmassen. Bei mehr als 30 Gew.-% an Fumarsäureester sinkt die Thermostabilität der Copolymerisate.

Als Fumarsäuredi-(C₁-C₆-alkyl)ester seien genannt Fumarsäuredimethylester, Fumarsäurediethylester, Fumarsäuredi-(n-propyl)ester, Fumarsäuredi-(n-butyl)ester, Fumarsäuredi-(n-pentyl)ester, Fumarsäuredi-(n-hexyl)ester, Fumarsäuremethylethylester, Fumarsäuremethylhexylester, bevorzugt Fumarsäuredi-(n-hexyl)ester.

Als Fumarsäuredi-(C₃-C₈-cycloalkyl)ester kann man beispielsweise Fumarsäuredi-(cyclopropyl)ester, Fumarsäuredi-(cyclopentyl)ester, Fumarsäuredi-(cyclohexyl)ester, Fumarsäuredi-(cycloheptyl)ester, Fumarsäuredi-(cyclooctyl)ester einsetzen, besonders bevorzugt Fumarsäuredi-(cyclohexyl)ester, wobei die Cycloalkylgruppen bis zu dreifach mit C₁-C₄-Alkyl wie Methyl, Ethyl, n-Propyl, i-Propyl, n-Butyl, tert.-Butyl, bevorzugt Methyl, i-Propyl und tert.-Butyl, substituiert sein können, z.B. Fumarsäuredi-(4-methylcyclohexyl)ester und Fumarsäuredi-(2,4,6-trimethylcyclohexyl)ester.

Man kann aber auch Fumarsäure-C₁-C₆-alkyl-C₃-C₈-cycloalkylester wie Fumarsäure-methyl-cyclopropyl-ester, Fumarsäure-methyl-cyclopentyl-ester, Fumarsäure-methyl-cyclohexyl-ester, Fumarsäureethyl-cyclohexyl-ester, Fumarsäure-methyl-cycloheptyl-ester, Fumarsäure-ethyl-cyclooctyl-ester, Fumarsäure-propyl-cyclohexyl-ester, Fumarsäure-hexyl-cyclohexyl-ester, Fumarsäuremethyl-4-methylcyclohexyl-ester, bevorzugt Fumarsäure-methylcyclohexyl-ester und Fumarsäure-ethyl-cyclohexyl-ester, einsetzen.

Als Komponente D) kann man 0 bis 20 Gew.-% weitere mit den obengenannten Monomeren copolymersierbare Monomere wie Styrol, alpha-Methylstyrol, Vinylchlorid, Vinylidenchlorid, Maleinsäure, Maleinsäureester wie Maleinsäuredimethylester, Maleinsäurediethylester, Maleinsäuredi-n-propylester, Maleinsäuredi-i-propylester, Maleinsäurediallylester oder Maleinsäuredicyclohexylester, Acrylnitril, Methacrylnitril, (Meth)Acrylamide, Itakonsäure, Itakonsäureester wie Itakonsäuredimethylester, Itakonsäurediethylester, Itakonsäuredi-n-propylester und Itakonsäuredi-i-propylester sowie Vinylacetat einsetzen.

Als Komponente E) verwendet man Übertragungsregler wie Thioessigsäure und deren C₁-C₃-Alkylester und Mercaptane, bevorzugt C₁-C₁₅-Alkylmercaptane wie Methyl-, Ethyl-, n-Propyl-, n-, sek.-Butyl-, n-Pentyl-, n-Hexyl-, n-Heptyl-, n-Octyl-, n-Nonyl-, n-Decyl-, n-Undecy-, n-, i-, tert.-Dodecyl-, n-Tridecyl-, n-Tetradecyl und n-Pentadecyl-mercaptan, bevorzugt tert.-Butyl-, n- und i-Dodecyl-mercaptan, besonders bevorzugt n-Dodecylmercaptan.

Die erfindungsgemäße Mitverwendung eines Übertragungsreglers E) bewirkt einerseits, daß die Kettenlänge bei der Polymerisation der Endphase begrenzt wird, und andererseits, daß der Regler als Endgruppe eingebaut wird. Insgesamt erhöht sich so im allgemeinen die thermische Stabilität.

Die Menge des Übertragungsreglers wählt man im Bereich von 0,01 bis 2, vorzugsweise von 0,1 bis 2 Gew.-% bezogen auf das Gesamtgewicht der eingesetzten Monomeren.

Die Copolymerisate kann man in an sich bekannter Weise durch Substanz-, Lösungs-, Suspensions- oder Emulsionspolymerisation herstellen.

Bei der Herstellung durch Substanzpolymerisation kann man öllösliche Initiatoren (Radikalstarter) wie Diacylperoxide, Perester, Peroxydicarbonate oder Azoverbindungen wie Azobis-isobutyronitril und 2,2'-Azobis-(2,4-dimethyl-valeronitril) verwenden. Die Polymerisationstemperatur liegt im allgemeinen im Bereich von 50 bis 150°C, bevorzugt von 70 bis 120°C. Zur Regulierung des Molekulargewichtes kann man beispielsweise Mercaptane zusetzen.

Die Herstellung der Copolymerisate kann auch durch Lösungspolymerisation erfolgen. Geeignete Lösungsmittel sind beispielsweise Toluol, Xylol, Aceton oder Tetrahydrofuran. Im übrigen kann man die Polymerisation unter den für die Substanzpolymerisation geschilderten Bedingungen durchführen.

Die Herstellung der Copolymerisate durch Suspensionspolymerisation kann man in Gegenwart von Schutzkolloiden wie Polyvinylpyrrolidon, Polyvinylalkohol, Methylcellulose, Poly(meth)acrylsäure oder Copolymere auf Basis von Methylmethacrylat und (Meth)Acrylsäure durchführen.

Als Initiatoren kann man in der Regel die für die Substanzpolymerisation beschriebenen öllöslichen Radikalstarter einsetzen, bevorzugt Dilaurylperoxid. Die Reaktionstemperatur wählt man hierbei im allgemeinen im Bereich von 50 bis 150°C.

Bei der Herstellung durch Emulsionspolymerisation führt man die Reaktion bei Temperaturen im Bereich von 30 bis 150, bevorzugt von 50 bis 100°C durch. Bei Temperaturen unter 30°C verlängern sich die Polymerisationszeiten, bei Temperaturen über 100°C ist es erforderlich die Polymerisation unter Druck durchzuführen.

Als Initiatoren kann man thermisch zerfallende wasserlösliche Initiatoren wie Natriumperoxodisulfat, Kaliumperoxodisulfat, Dilaurylperoxid oder Ammoniumperoxodisulfat oder auch Redox-Systeme wie tert.-Butylhydroperoxid/Natriumformaldehydsulfoxylat oder Persulfat/Sulfit verwenden.

Die Initiatormenge wählt man vorzugsweise im Bereich von 0,02 bis 2 Gew.-%, bezogen auf das Gesamtgewicht der eingesetzten Monomeren.

Als Emulgatoren setzt man in der Regel die üblichen anionogenen und nicht ionogenen Verbindungen ein wie die Salze von langkettigen Carbon- und Sulfonsäuren wie Natriumlaurylsulfat, Natriumdodecylbenzolsulfonat, o-Dodecyldiphenyletherdisulfonat, Dioctylnatriumsulfosuccinat, Alkylphenoxypolyethylensulfonate, Fettalkoholpolyglykolether, Alkylarylpolyglykolether, Fettsäuremonoethanolamide sowie ethoxylierte Fettsäureamide und -amine.

Bezogen auf das Gesamtgewicht des Emulsionscopolymerisates liegt die Emulgatormenge vorzugsweise im Bereich von 0,05 bis 5 Gew.-%.

Gegebenenfalls kann man zur Konstanthaltung des pH-Wertes einen Puffer mitverwenden. Üblich sind Salze der Phosphorsäure, z.B. Natriumphosphat und Mischungen von Kaliumhydrogenphosphat und Dinatriumhydrogenphosphat; man kann auch ammoniakalische Lösungen verwenden.

Im übrigen wird das erfindungsgemäße Copolymerisat durch Emulsionspolymerisation in der Regel so hergestellt, daß man eine wäßrige Mischung, bestehend aus Monomeren, Emulgator, Initiator, Übertragungsregler und gegebenenfalls einem Puffersystem in einem mit Stickstoff inertisierten Reaktor vorlegt, in der Kälte unter Rühren inertisiert und dann für etwa 30 bis 600 Minuten auf die Polymerisationstemperatur bringt.

Des weiteren kann man der Monomermischung oder dem Copolymerisat die üblichen, dem Fachmann bekannten Zusatzstoffe und Verarbeitungshilfsmittel wie Stabilisatoren, Antioxidatien, Entformungshilfsmittel, Antistatika und Lichtschutzmittel zusetzen.

Die erfindungsgemäßen Copolymerisate kann man in der Regel nach bekannten Methoden durch Ausfällung, Filtration und anschließen der Trocknung aufarbeiten.

Für die Ausfällung kann man z.B. wäßrige Lösungen von anorganischen Salzen wie Natriumchlorid, Natriumsulfat, Magnesiumsulfat und Calciumchlorid, wäßrige Lösungen von Salzen der Ameisensäure wie Magnesiumformiat, Calciumformiat und Zinkformiat, wäßrige Lösungen von anorganischen Säuren wie Schwefel- und Phosphorsäure sowie wäßrige ammoniakalische und aminische Lösungen sowie andere wäßrige alkalische Lösungen, beispielsweise von Natrium- und Kaliumhydroxid verwenden. Man kann das Polymerisat zum Beispiel auch durch Gefrierkoagulation abtrennen.

Die Trocknung kann beispielsweise durch Gefrier-, Sprüh-, Wirbelschicht- und Umlufttrocknung erfolgen.

Das getrocknete Copolymerisat kann man dann durch übliche Verarbeitungsverfahren wie Extrudieren, Kalandrieren und Spritzgießen zu Formkörpern verarbeiten.

Die erfindungsgemäßen Copolymerisate weisen gegenüber bekannten PMMA-Polymerisaten neben sehr guter Transparenz, Brillianz, Kratzfestigkeit, und Witterungsbeständigkeit eine erhöhte Wärmeformbeständigkeit und einer verringerte Wasseraufnahme auf.

Eine besondere Ausführungsform betrifft thermoplastische Formmassen, enthaltend 10 bis 96, bevorzugt 30 bis 80 Gew.-%, der erfindungsgemäßen Copolymerisate und 90 bis 4, bevorzugt 70 bis 20 Gew.-%, Pfropfcopolymerisate.

Geeignete Pfropfcopolymerisate erhält man im allgemeinen durch nacheinander ausgeführte Emulsionspolymerisationen. Die Pfropfcopolymerisate kann man dabei zwei-, drei-, vier- oder fünfstufig herstellen, wobei prinzipiell auch mehr als fünfstufig hergestellte Pfropfcopolymerisate nach der hier beschriebenen Methode zugänglich sind.

Als besonders geeignete Pfropfcopolymerisate seien die folgenden aufgeführt:
(I) Die äußere Schale b₁) dieser Emulsionspfropfcopolymerisate ist erhältlich durch b₁) Emulsionspolymerisation eines Monomerengemisches aus
   50 bis 99,45 Gew.-%, bevorzugt von 70 bis 99 Gew.-% einer Mischung aus
   b₁₁) 100 bis 70 Gew.-%, bevorzugt von 100 bis 85 Gew.-% Methylmethacrylat (I) und
   b₁₂) 0 bis 30 Gew.-%, bevorzugt von 0 bis 15 Gew.-% Cyclohexylmethacrylat (II)
   0,5 bis 5 Gew.-%, bevorzugt von 1 bis 4 Gew.-% mindestens einer Verbindung, ausgewählt aus der Gruppe bestehend aus C₁-C₄-Alkylacrylat (III) und C₅-C₈-Cycloalkylacrylat (IV),
   0 bis 30 Gew.-%, bevorzugt von 0 bis 20 Gew.-% mindestens einer Verbindung (V), ausgewählt aus der Gruppe bestehend aus Fumarsäuredi-(C₁-C₆-alkyl)ester, Fumarsäuredi-(C₃-C₈-cycloalkyl)ester und Fumarsäure-C₁-C₆-alkyl-C₃-C₈-cycloalkyl-ester, in denen die Cycloalkylgruppen jeweils bis zu dreifach mit C₁-C₄-Alkylgruppen substituiert sein können,
   0 bis 20 Gew.-%, bevorzugt von 0 bis 10 Gew.-% mindestens eines weiteren Comonomeren (VI) und
   0,05 bis 2 Gew.-%, bevorzugt von 0,05 bis 1 Gew.-% eines Übertragungsreglers (VII).
   Besonders bevorzugt wählt man die Zusammensetzung dieser äußeren Stufe so, daß sie der des erfindungsgemäßen Copolymerisats entspricht. Ihre Herstellung erfolgt im allgemeinen durch Emulsionspolymerisation in Gegenwart eines Polymeren, welches ein-, zwei-, drei- oder vierstufig hergestellt sein kann.
(II) Im Falle eines zweistufig hergestellten Pfropfcopolymerisats, führt man die Polymerisation der äußeren Hülle erfindungsgemäß in Gegenwart von 10 bis 90, bevorzugt von 30 bis 70 Gew.-% eines einstufig hergestellten Polymeren W₁ aus, welches erhältlich ist durch
   b₂) Emulsionspolymerisation eines Monomerengemisches aus
   60 bis 89,99 Gew.-%, bevorzugt von 70 bis 85 Gew.-% mindestens eines C₁-C₂₀-Alkylesters der Acrylsäure (IIIa)
   10 bis 39,99 Gew.-%, bevorzugt von 15 bis 25 Gew.-% mindestens eines vinylaromatischen Monomeren (VIII)
   0 bis 5 Gew.-%, bevorzugt von 0 bis 3 Gew.-% mindestens eines copolymerisierbaren polyfunktionellen vernetzenden Monomeren (IX)
   0,01 bis 5 Gew.-%, bevorzugt von 0,01 bis 3 Gew.-% mindestens eines copolymerisierbaren pfropfvernetzenden Monomeren (X),
   wobei die Glasübergangstemperatur des Polymerisats b₂) im allgemeinen im Bereich von (-60) bis 25°C liegt.
(III) Im Falle eines dreistufig hergestellten Pfropfcopolymerisats, führt man die Polymerisation der äußeren Hülle erfindungsgemäß in Gegenwart von 30 bis 90, bevorzugt von 50 bis 80 Gew.-% eines zweistufig hergestellten Polymeren W₂ aus, welches erhältlich ist durch
   c₁) Emulsionspolymerisation von 10 bis 90 Gew.-% des unter b₂) genannten Monomerengemisches in Gegenwart von 10 bis 90 Gew.-% eines Polymeren X₁, welches erhältlich ist durch
   c₂) Emulsionspolymerisation eines Monomerengemisches aus
      50 bis 99,49 Gew.-%, bevorzugt 70 bis 99 Gew.-% einer Mischung aus
      c₂₁) 100 bis 70 Gew.-% Methylmethacrylat (I) und
      c₂₂) 0 bis 30 Gew.-% Cyclohexylmethacrylat (II)
      0,5 bis 5 Gew.-%, bevorzugt 1 bis 4 Gew.-% mindestens einer Verbindung, ausgewählt aus der Gruppe bestehend aus C₁-C₄-Alkylacrylat (III) und C₅-C₈-Cycloalkylacrylat (IV),
      0 bis 30 Gew.-%, bevorzugt 0 bis 20 Gew.-% mindestens einer Verbindung (V), ausgewählt aus der Gruppe bestehend aus Fumarsäuredi(C₁-C₆-alkyl)ester, Fumarsäuredi-(C₃-C₈-cycloalkyl)ester und Fumarsäure-C₁-C₆-alkyl-C₃-C₈-cycloalkyl-ester, in denen die Cycloalkylgruppen jeweils bis zu dreifach mit C₁-C₄-Alkylgruppen substituiert sein können,
      0 bis 20 Gew.-%, bevorzugt von 0 bis 10 Gew.-% mindestens eines weiteren Comonomeren (VI) und
      0 bis 5 Gew.-%, bevorzugt 0,05 bis 3 Gew.-% mindestens eines copolymerisierbaren polyfunktionellen vernetzenden Monomeren (IX)
      0,01 bis 5 Gew.-%, bevorzugt von 0,01 bis 3 Gew.-% mindestens eines copolymerisierbaren pfropfvernetzenden Monomeren (X).
   (IV) Im Falle eines vierstufig hergestellten Pfropfcopolymerisats, führt man die Polymerisation der äußeren Hülle erfindungsgemäß in Gegenwart von 40 bis 90, bevorzugt von 50 bis 80 Gew.-% eines dreistufig hergestellten Polymeren W₃ aus, welches erhältlich ist durch
      d₁) Emulsionspolymerisation von 10 bis 50 Gew.-% des unter b₂) genannten Monomerengemisches in Gegenwart von 50 bis 90 Gew.-% eines Polymeren X₂, welches erhältlich ist durch
      d₂) Emulsionspolymerisation des unter c₂) genannten Monomerengemisches in Gegenwart von 40 bis 90 Gew.-% eines Polymeren Y₁, welches erhältlich ist durch
      d₃) Emulsionspolymerisation des unter b₂) genannten Monomerengemisches.
   (V) Im Falle eines fünfstufig hergestellten Pfropfcopolymerisats, führt man die Polymerisation der äußeren Hülle erfindungsgemäß in Gegenwart von 60 bis 95, bevorzugt von 70 bis 90 Gew.-% eines vierstufig hergestellten Polymeren W₄ aus, welches erhältlich ist durch
      e₁) Emulsionspolymerisation von 20 bis 70 Gew.-% des unter b₂) genannten Monomerengemisches in Gegenwart von 30 bis 80 Gew.-% eines Polymeren X₃, welches erhältlich ist durch
      e₂) Emulsionspolymerisation von 5 bis 50 Gew.-% des unter c₂) genannten Monomerengemisches in Gegenwart von 50 bis 95 Gew.-% eines Polymeren Y₂, welches erhältlich ist durch
      e₃) Emulsionspolymerisation von 5 bis 50 Gew.-% des unter b₂) genannten Monomerengemisches in Gegenwart von 50 bis 95 Gew.-% des Polymeren X₁.

Die Glasübergangstemperaturen der harten, nicht-elastomeren Phasen b₁) und c₂) betragen in der Regel mehr als 50°C, vorzugsweise liegen sie im Bereich von 80 bis 130°C.

Den mittleren Teilchendurchmesser der Pfropfcopolymerisate wählt man im allgemeinen im Bereich von 10 bis 1000 nm, bevorzugt von 50 bis 500 nm, besonders bevorzugt von 100 bis 500 nm.

Unter den Acrylsäure-C₁-C₂₀-alkylestern (IIIa) sind die C₁-C₁₀-Alkylester wie Methyl-, Ethyl-, n-, i-Propyl, n-, sek.-, i-, tert.-Butyl-, n-, neo- Pentyl, n-Hexyl-, n-Heptyl-, n-Octyl-, n-Nonyl-, n-Decylacrylat, bevorzugt, wobei n-Butylacrylat und 2-Ethylhexylacrylat sowie deren Mischungen besonders bevorzugt sind.

Als vinylaromatische Monomere (VIII) kann man Styrol, alpha-Methylstyrol, tert.-Butylstyrol, Monochlorstyrol, Vinyltoluol sowie (Meth)Acrylsäurephenyl-C₁-C₄-alkylester, wobei die Phenylgruppe bis zu dreifach mit C₁-C₄-Alkyl oder C₁-C₄-Cycloalkyl substituiert sein kann, wie Benzylacrylat, p-Tolylacrylat, 2-, 4-Methoxyphenylacrylat, Phenethylacrylat, Phenylpropylacrylat und Phenylbutylacrylat, bevorzugt Phenethylacrylat und Phenylpropylacrylat, oder Mischungen davon verwenden.

Vinylaromatische Monomere erhöhen in der Regel den Brechungsindex. So kann man hierdurch den Brechungsindex der elastomeren Phasen (Komponente b₂)) an den der harten Phasen angleichen. Ferner kann man durch die vinylaromatischen Monomeren auch den Brechungsindex des Pfropfpolymerisats an denjenigen der erfindungsgemäßen Copolymerisate anpassen.

Als mischpolymerisierende polyfunktionelle vernetzende Monomere (IX) seien beispielhaft aufgeführt Alkylenglykoldi(meth)acrylate wie Ethylenglykoldi(meth)acrylat, 1,2-Propandioldi(meth)acrylat, 1,3- Propandioldi(meth)acrylat, 1,3-Butandioldi(meth)acrylat, 1,4- Butandioldi(meth)acrylat, Oligo- und Polyethylenglykoldi(meth)acrylat,

Acrylate und Methacrylate von Glycerin, Trimethylolpropan, Pentaerythrit, Inosit und ähnliche Zuckeralkohole, Acryl- und Methacrylamide von Ethylendiamin und andere aliphatische Di- und Polyamine,
Triallylcyanurat und Triallylisocyanurat sowie
Vinylbenzole wie Divinylbenzol und Trivinylbenzol.

Die Comonomeren (IX) dienen im allgemeinen als Vernetzungsmittel. Sie werden aufgrund ihrer Eigenschaft, sich gleichmäßig in die polymere Phase einzubauen, auch als "Polymerisationsvernetzer" bezeichnet. Während der Polymerisationsreaktion ist die Geschwindigkeit ihres Verbrauchs im wesentlichen vergleichbar mit derjenigen des Hauptmonomeren, wodurch eine Vernetzung innerhalb der Phase zustande kommt.

Als copolymerisierbare pfropfvernetzende Monomere (X) eignen sich Dicyclopentadienyl und Allyl-, Methallyl- und Crotylester einer α,β-ungesättigten Carbonsäure oder Dicarbonsäure, bevorzugt Allylmethacrylat.

Solche pfropfaktiven Comonomere sorgen in der Regel für eine äußere Vernetzung und bewirken beim Aufbau eines Emulsionspfropfcopolymerisates beispielsweise die Verknüpfung der Kernphase mit der nachfolgenden Polymerisationsstufe. Pfropfvernetzer wie Allylmethacrylat zeigen dieses Verhalten, weil eine polymerisierbare Doppelbindung (Doppelbindung des Säureteils) mit vergleichbarer Geschwindigkeit wie das Hauptmonomere (Methylmethacrylat) polymerisiert. Dagegen reagiert die Doppelbindung der Allylgruppe mit einer deutlich niedrigeren Polymerisationsgeschwindigkeit, so daß am Ende der Polymerisation einige dieser Doppelbindungen unverändert in der Kernphase erhalten bleiben, wodurch eine Pfropfvernetzung zwischen zwei Phasen möglich ist.

Weniger als 0,01 und mehr als 5 Gew.-% an pfropfvernetzenden Monomeren (V) führen nach den bisherigen Beobachtungen zu unzureichenden Schlagzähigkeitswerten.

Als Übertragungsregler (VII) bei der Herstellung der Pfropfcopolymere kann man die weiter oben genannten Verbindungen (Komponente E) einsetzen. Durch die Verwendung von Übertragungsreglern kann man vorteilhaft das Molekulargewicht der äußeren Hülle der Pfropfcopolymere den erfindungsgemäßen Copolymerisaten anpassen.

In einer besonders bevorzugten Ausführungsform wählt man bei drei- bis fünfstufig hergestellten Pfropfpolymeren die Zusammensetzung der Monomerengemische der harten, nicht-elastomeren Stufen (Komponente c2)) so, daß die Art und Menge der Monomeren I bis VI dieser Komponente denen der Komponenten A) bis D) der erfindungsgemäßen Copolymerisate entsprechen, mit dem Unterschied, daß man zusätzlich 0 bis 5 Gew.-%, bevorzugt 0,05 bis 3 Gew.-% mindestens eines copolymerisierbaren polyfunktionellen vernetzenden Monomeren (IX) und 0,01 bis 5 Gew.-%, bevorzugt 0,01 bis 3 Gew.-% mindestens eines copolymerisierbaren pfropfvernetzenden Monomeren (X) verwendet.

Hierdurch erhält man in der Regel eine gute Verträglichkeit der erfindungsgemäßen Copolymerisate mit den Pfropfcopolymeren. Gleichzeitig verbessert man hierdurch im allgemeinen die optische Güte der erfindungsgemäßen thermoplastischen Formmassen.

Selbstverständlich kann man auch einen anderen Aufbau des Pfropfcopolymeren als den oben genannten wählen, der im wesentlichen durch eine alternierende Sequenz von harten und weichen Polymerschalen definiert ist. So wäre zum Beispiel auch ein vierstufig hergestelltes Pfropfcopolymer mit einem Hart-Weich-Weich-Hart-Aufbau mit den genannten Monomerengemischen und Herstellverfahren möglich. Dabei richtet sich die Abfolge der Polymerschalen in der Regel nach den gewünschten Eigenschaften des Pfropfcopolymeren bzw. des damit hergestellten Blends.

Die erfindungsgemäßen Emulsionspfropfcopolymerisate kann man in an sich bekannter Weise nach der Methodik der Emulsionspfropfpolymerisation, die auch als Saatlatex-Verfahren bezeichnet wird, in zwei bis fünf aufeinanderfolgenden Stufen herstellen, wobei die Latexteilchen bis zum Abschluß der Endstufe im emulgierten Zustand verbleiben.

Durch das polymere Produkt im Saatlatex wird der Gesamtgehalt an Teilchen in den zwei-, drei-, vier- oder fünfstufigen Endprodukten im allgemeinen festgelegt. Das bedeutet, daß nach der ersten Polymerisationsstufe weitere Teilchen in der Regel nicht neu gebildet werden und der Teilchengehalt annähernd konstant bleibt.

Durch Verwendung von Emulgatoren kann man die Teilchengröße sowohl des Kernlatex als auch der Latexteilchen in den Zwischenstufen festlegen, wobei Emulgatorart und -konzentration bestimmend sind.

Es können anionogene und nicht ionogene Emulgatoren verwendet werden.

Geeignete Emulgatoren sind beispielsweise
Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren.

Als nichtionogene Emulgatoren sind beispielsweise
Fettalkoholpolyglykolether, Alkylarylpolyglykolether, Fettsäuremonoethanolamide sowie ethoxylierte Fettsäureamide und -amine geeignet.

Bezogen auf das Gesamtgewicht des Emulsionspfropfcopolymerisates liegt die Gesamtemulgatormenge vorzugsweise bei 0,05 bis 5 Gew.-%.

Der Durchmesser der fertigen Emulsionspolymerisatteilchen wird in an sich bekannter Weise in der Regel bei 10 bis 1000 nm, bevorzugt bei 100 bis 500 nm eingestellt.

Als Polymerisationsinitiatoren können
Ammonium- und Alkaliperoxodisulfate wie Kaliumperoxodisulfat sowie
Initiatorkombinationssysteme wie Natriumpersulfat-Natriumhydrosulfit, Kaliumpersulfat-Natriumformaldehydsulfoxylat und Kaliumperoxodisulfat-Natriumdithionit-Eisen-II-sulfat
verwendet werden, wobei die Polymerisationstemperatur im Fall der thermisch zu aktivierenden Ammonium- und Alkaliperoxodisulfate bei 50 bis 100°C und bei den Initiatorkombinationen, die als Redoxsysteme wirksam sind, darunter liegen kann, etwa im Bereich von 20 bis 50°C.

Neben dem Übertragungsregler (VII), der bei der Polymerisation der äußeren harten Schale (Komponente b₁)) verwendet wird, kann die Polymerisation des Kerns und der übrigen Schalen ebenfalls in Gegenwart eines Reglers durchgeführt werden. Die Gesamtreglermenge liegt zwischen 0,01 bis 2 Gew.-%, bezogen auf das Gesamtgewicht des Polymerisates.

Im allgemeinen empfiehlt es sich, den pH-Wert konstant zu halten, weswegen die Mitverwendung eines Puffers zweckmäßig ist. Üblich sind Salze der Phosphorsäure, z.B. Mischungen von Kaliumdihydrogenphosphat und Dinatriumhydrogenphosphat; es können auch ammoniakalische Lösungen verwendet werden.

Die Polymerisation kann bei einer Temperatur im Bereich von 70 bis 100°C durchgeführt werden, wobei eine Temperatur von 85 bis 95°C bevorzugt ist. Bei Temperaturen unter 70°C verlängern sich in der Regel die Polymerisationszeiten, bei Temperaturen über 100°C ist es im allgemeinen erforderlich, die Polymerisation unter Druck durchzuführen.

Im übrigen werden die erfindungsgemäßen Emulsionspfropfcopolymerisate im allgemeinen so hergestellt, daß man eine wäßrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann für etwa 15 bis 120 Minuten auf die Polymerisationstemperatur bringt. Auf diese Weise wird zunächst durch Emulgierung und Polymerisation des Kernmonomerengemisches der Kernlatex gebildet. Die weiteren Stufen werden jeweils unter Zulauf der Monomeren in Gegenwart der bereits gebildeten Stufe durch Emulsionspolymerisation erzeugt, wobei es zweckmäßig ist, die Monomeren zuvor unter Rühren im wäßrigen Medium zu emulgieren.

Grundsätzlich erfolgt der Zulauf einer weiteren Stufe erst dann, wenn die Polymerisation der vorhergehenden Stufe abgeschlossen ist, wodurch eine Durchmischung der einzelnen Stufen unterdrückt und ein reiner zwei-, drei-, vier- oder fünfstufiger Aufbau der Emulsionspfropfcopolymerisate II-V gewährleistet wird. Dadurch kann eine Nachreaktionszeit von 15 bis 120 Minuten nach Zulaufen der jeweiligen Stufe und vor Beginn des Zulaufs der nächsten Stufe erforderlich sein.

Die Isolierung der Pfropfcopolymerisate aus dem erhaltenen Latex erfolgt in der Regel auf bekannte Weise durch Ausfällung, Filtration und anschließender Trocknung. Für die Ausfällung können beispielsweise wäßrige Lösungen von anorganischen Salzen wie Natriumchlorid, Natriumsulfat, Magnesiumsulfat und Calciumchlorid, wäßrige Lösungen von Salzen der Ameisensäure wie Magnesiumformiat, Calciumformiat und Zinkformiat, wäßrige Lösungen von anorganischen Säuren wie Schwefel- und Phosphorsäure sowie wäßrige ammoniaklische und aminische Lösungen sowie andere wäßrige alkalische Lösungen, z.B. von Natrium- und Kaliumhydroxid verwendet werden.

Die Trocknung kann beispielsweise durch Gefrier-, Sprüh-, Wirbelschicht- und Umlufttrocknung erfolgen.

Die getrockneten Pfropfcopolymerisate kann man dann in Extrudern mit den erfindungsgemäßen Copolymerisaten zu den erfindungsgemäßen schlagzähen thermoplastischen Formmassen verarbeiten.

Ferner können Koagulation und Entwässerung der Pfropfcopolymerisate direkt im Extruder erfolgen. Zur Herstellung der thermoplastischen Formmassen kann man die Pfropfcopolymerisate auch unmittelbar im Extruder mit den erfindungsgemäßen Copolymerisaten vermischen.

Nicht nur durch Extrusion, sondern auch durch andere Verarbeitungsverfahren wie Kalandrieren und Spritzgießen können die erfindungsgemäßen Pfropfcopolymerisate unter Abmischung mit den erfindungsgemäßen Copolymerisaten zu Formkörpern, Folien und Platten verarbeitet werden.

Den erfindungsgemäßen thermoplastischen Formmassen kann man neben den erfindungsgemäß verwendeten Copolymerisaten und Pfropfcopolymerisaten noch übliche Zusatzstoffe und Verarbeitungshilfsmittel wie Stabilisatoren, Antioxidantien, Entformungshilfsmittel, Lichtschutzmittel, Flammschutzmittel wie Phosphor-Verbindungen, halogenierte organische und anorganische Verbindungen, Metalloxide, Sulfonsäuregruppen-enthaltende Monomere und/oder Polymere, Fluor-Verbindungen und weitere an sich bekannte Flammschutzmittel allein oder in Kombination, und Antistatika zusetzen.

Die erfindungsgemäßen thermoplastischen Formmassen weisen gegenüber dem Stand der Technik bei einer hohen Transparenz, einer guten Wärmeformoeständigkeit und einer sehr guten Bewitterungsstabilität eine verbesserte Schlagzähigkeit auf.

### Beispiele

Alle Versuche wurden in einer Stickstoffatmosphäre durchgeführt.

### Beispiel 1

20 Gew.-% einer Emulsion bestehend aus 2,05 kg vollentsalztem Wasser, 1,059 kg Methylmethacrylat, 265 g Fumarsäuredicyclohexylester, 27 g Methylacrylat, 2,7 g n-Dodecylmercaptan und 54 g einer 60 gew.-%igen wäßrigen Dioctylnatriumsulfosuccinat-Lösung wurden zu einer Mischung aus 2,05 kg vollentsalztem Wasser und 2,7 g Kaliumperoxodisulfat gegeben und unter Rühren auf 80°C erhitzt. Nach 30 min Rühren unter dieser Temperatur, wurden während 90 min die restlichen 80 Gew.-% der oben aufgeführten Emulsion zudosiert. Anschließend wurde noch 30 min bei 80°C weitergerührt. Dann wurde das Polymerisat durch Gefrierkoagulation abgetrennt, mit Wasser gewaschen und bei 80°C getrocknet.

### Beispiel 2

Es wurde wie in Beispiel 1 gearbeitet, mit dem Unterschied, daß 920 g Methylmethacrylat und 405 g Fumarsäuredicyclohexylester eingesetzt wurden. Die Mengen der restlichen Komponenten wurden beibehalten.

### Beispiel 3

Eine Mischung aus 3300 g vollentsalztem Wasser, 800 g Methylmethacrylat, 183 g Fumarsäuredicyclohexylester, 20 g Methylacrylat, 1,9 g n-Dodecylmercaptan, 1,5 g Dilaurylperoxid, 20 g Natriumphosphathydrat und 20 g einer 1,6 gew.-%igen Lösung eines Natriumsalzes eines Copolymerisates aus 64 Gew.-% Methacrylsäure und 36 Gew.-% Methylmethacrylat wurde unter Rühren auf 85°C erhitzt und 8 h bei dieser Temperatur gehalten. Dann wurde das Polymerisat durch Gefrierkoagulation abgetrennt, mit Wasser gewaschen und bei 80°C getrocknet.

### Beispiel 4

Eine Mischung aus 600 g Methylmethacrylat, 300 g Cyclohexylmethacrylat, 20 g Methylacrylat, 230 g Fumarsäuredicyclohexylester und 2 g n-Dodecylmercaptan wurde auf 95°C erhitzt. Als die Temperatur während dieses Vorganges 80°C erreichte, wurden zur Reaktionsmischung 0,3 g 2,2'-Azobis-(2,4-dimethyl-valeronitril) hinzugegeben. Nach Erreichen der Endtemperatur wurde die Mischung 20 min bei dieser Temperatur gehalten. Anschließend wurde wie in den obigen Beispielen aufgearbeitet.

### Vergleichsbeispiel 1

Es wurde wie in Beispiel 1 beschrieben verfahren, mit dem Unterschied, daß die Polymerisation ohne den Übertragungsregler n-Dodecylmercaptan durchgeführt wurde.

### Vergleichsbeispiel 2

Es wurde wie in Beispiel 1 beschrieben verfahren, mit dem Unterschied, daß die Polymerisation ohne Methylacrylat durchgeführt wurde.

### Vergleichsbeispiel 3

Es wurde wie in Beispiel 1 beschrieben verfahren, mit dem Unterschied, daß 660 g Methylmethacrylat und 660 g Fumarsäuredicyclohexylester eingesetzt wurden. Die Mengen der restlichen Komponenten wurden beibehalten.

### Vergleichsbeispiel 4

Es wurde wie in Beispiel 1 beschrieben verfahren, mit dem Unterschied, daß 983 g Methylmethacrylat, kein Fumarsäureester, 20 g Methylacrylat, 1,5 g Dilaurylperoxid anstelle des Kaliumperoxodisulfates und 1,9 g n-Dodecylmercaptan eingesetzt wurden. Die Mengen der restlichen Komponenten wurden beibehalten.

### Vergleichsbeispiel 5 (analog zu EP-B 97,948)

Eine Mischung aus 600 g Methylmethacrylat, 300 g Cyclohexylmethacrylat, 100 g Methylacrylat wurde auf 95°C erhitzt. Als die Temperatur während dieses Vorganges 80°C erreichte wurden zur Reaktionsmischung 0,3 g 2,2'-Azobis-(2,4-dimethyl-valeronitril) hinzugegeben. Nach Erreichen der Endtemperatur wurde die Mischung 20 min bei dieser Temperatur gehalten. Anschließend wurde wie in den obigen Beispielen aufgearbeitet.

### Vergleichsbeispiel 6 (analog zu EP-B 97,948)

Eine Mischung aus 600 g Methylmethacrylat, 300 g Cyclohexylmethacrylat, 100 g Methylacrylat und 250 g Fumarsäuredicyclohexylester wurde auf 95°C erhitzt. Als die Temperatur während dieses Vorganges 80°C erreichte wurden zur Reaktionsmischung 0,3 g 2,2'-Azobis-(2,4-dimethyl-valeronitril) hinzugegeben. Nach Erreichen der Endtemperatur wurde die Mischung 20 min bei dieser Temperatur gehalten. Anschließend wurde wie in den obigen Beispielen aufgearbeitet.

Die Bestimmung der Glasübergangstemperatur, T_{g}, erfolgte nach der DSC-Methode (ASTM D 3418-82).

Um die thermische Stabilität zu ermitteln, wurden Substanzproben aus den jeweiligen Beispielen mittels Thermogravimetrie (TGA) (TGA/M2 der Fa. Mettler) auf 490°C bei einer Aufheizrate von 20°C/min erhitzt und dabei die Massenveränderung bestimmt. Eine Auftragung der relativen Masse (Masse der Probe bei einer bestimmten Temperatur/Anfangsmasse bei Raumtemperatur) gegen die Temperatur ergab jeweils eine Kurve, die sich in drei Teile einteilen ließ: (a) einen oberen, fast waagrechten Ast, der den Beginn des Versuches bis zu dem Zeitpunkt widerspiegelt, an dem Teile der Probe sich zu zersetzen begannen, (b) einen daran anschließenden abfallenden Ast, der den Zeitraum widergibt, an dem sich der größte Teil der Probe zersetzte, und (c) einen unteren waagrechten Ast, der anzeigt, daß die Zersetzung der Polymerprobe abgeschlossen ist.

Zur Bestimmung der thermischen Stabilität definiert man nun zwei Geraden, die die Asymptoten der Kurvenabschnitte (a) und (b) repräsentieren. Man erhält die eine Gerade durch Verlängerung des nicht gekrümmten Teils der Kurve (a). Die andere Gerade ist durch den Wendepunkt des Kurvenabschnittes (b) und der Steigung der Kurve (b) in diesem Punkt definiert. Als Maß für die thermische Stabilität wurde die charakteristische Temperatur, T_{z}, definiert, die sich aus dem Schnittpunkt der beiden Geraden ergibt. Zur Berechnung wurde ein auf dem TGA-Meßgerät installiertes Computerprogramm der Fa. Mettler verwendet.

Die Bestimmung der Wasseraufnahmerate erfolgte gemäß ASTM D 570 bei 23°C.

Die Ergebnisse der einzelnen Qualitätsprüfungen sind den Tabellen 1 und 2 zu entnehmen. Sie zeigen, daß die erfindungsgemäßen Copolymerisate in ihren thermischen Eigenschaften und hinsichtlich der Wasseraufnahmefähigkeit den aus dem Stand der Technik bekannten Emulsionspolymerisaten überlegen sind.

**Tabelle 1**

| Glasübergangstemperatur und thermische Stabilität | | | | | | |
|---|---|---|---|---|---|---|
| Beispiel | MMA* [g] | FDCH* [g] | MA* [g] | n-Dodecylmercaptan [g] | T_{g} [°C] | T_{z} nach TGA [°C] |
| 1 | 1059 | 265 | 27 | 2,7 | 127 | 330 |
| 2 | 920 | 405 | 27 | 2,7 | 132 | 328 |
| 3 | 800 | 183 | 20 | 1,9 | 126 | 330 |

| Vergleichsbeispiel | | | | | | |
|---|---|---|---|---|---|---|
| 1 | 1059 | 265 | 27 | 0 | 125 | 284 |
| 2 | 1059 | 265 | 0 | 2,7 | 126 | 286 |
| 3 | 660 | 660 | 27 | 2,7 | 139 | 250 |
| 4 | 983 | 0 | 20 | 1,9 | 115 | 340 |

| | | | | | | |
|---|---|---|---|---|---|---|
| *) MMA = Methylmethacrylat, FDCH = Fumarsäuredicyclohexylester, MA = Methylacrylat | | | | | | |

**Tabelle 2**

| Glasübergangstemperatur und Wasseraufnahme | | | | | | | |
|---|---|---|---|---|---|---|---|
| Beispiel | MMA [g] | CHMA* [g] | MA [g] | FDCH [g] | n-Dodecylmercaptan [g] | T_{g} [°C] | Wasseraufnahmerate |
| 4 | 600 | 300 | 20 | 230 | 2,0 | 120 | 1,0 % |

| Vergleichsbeispiel | | | | | | | |
|---|---|---|---|---|---|---|---|
| 5 | 600 | 300 | 100 | 0 | 0 | 96 | 1,2 % |

| | | | | | | | |
|---|---|---|---|---|---|---|---|
| *) CHMA = Cyclohexylmethacrylat | | | | | | | |

Die folgenden Beispiele betreffen thermoplastische Formmassen, enthaltend das erfindungsgemäße Copolymerisat und Pfropfcopolymerisate.

Folgende Abkürzungen werden in den Beispielen verwendet:
MMA Methylmethacrylat
ALMA Allylmethacrylat
MA Methylacrylat
BA Butylacrylat

### Beispiel 5

### Herstellung einer thermoplastischen Masse (1)

Eine Mischung aus
330 g vollentsalztem Wasser,
2 g des Natriumsalzes eines Copolymerisates aus 64 Gew.-% Methacrylsäure und 36 Gew.-% Methylmethacrylat in Form einer 1,6 gew.-%igen wäßrigen Lösung als Dispergiermittel und
2 g Natriumphosphathydrat als Puffer sowie
18,3 g Fumarsäuredicyclohexylester,
80,0 g Methylmethacrylat,
2,0 g Methylacrylat,
0,15 g Dilaurylperoxid sowie
0,19 g n-Dodecylmercaptan
wurde bei Raumtemperatur zunächst mehrmals mit Stickstoff gespült, sodann unter Rühren auf 85°C erhitzt und 8 h bei dieser Temperatur gehalten. Nach Abkühlung und Entspannung wurde das gebildete Polymerisat abgetrennt, gewaschen und getrocknet.

### Beispiel 6 (Vergleichsbeispiel)

Es wurde wie in Beispiel 5 beschrieben verfahren mit dem Unterschied, daß als Monomerengemisch 98,3 g Methylmethacrylat und 2,0 g Methylacrylat eingesetzt wurden.

### Beispiel 7

In einem Reaktionsgefäß von 10 l Inhalt wurden 30 Gew.-% einer Mischung bestehend aus
565 g MMA,
3 g ALMA,
5 g MA,
565 g vollentsalztem Wasser sowie
6,62 g einer 60 gew.-%igen wäßrigen Dioctylnatriumsulfosuccinat-Lösung
mit 284 g vollentsalztem Wasser und 1,14 g Natriumperoxodisulfat versetzt. Diese Vorlage wurde unter Rühren mit Stickstoff inertisiert und dann 30 min auf 80°C erhitzt. Anschließend wurden die restlichen 70 Gew.-% der Mischung während 30 min zudosiert. Nach Beendigung des Zulaufs wurde das Reaktionsgemisch weitere 30 min bei 80°C gerührt, und danach mit 448 g vollentsalztem Wasser verdünnt. Anschließend wurde zu diesem Reaktionsgemisch eine zweite Mischung bestehend aus
1130 g BA,
267 g Styrol,
14 g ALMA,
14 g einer 60 gew.-%igen wäßrigen Dioctylnatriumsulfosuccinat-Lösung,
1420 g vollentsalztem Wasser sowie
1,42 g Natriumperoxodisulfat
während 170 min zudosiert. Nach weiteren 90 min bei der oben angegebenen Temperatur wurde eine dritte Mischung bestehend aus
819 g MMA,
34 g MA sowie
1,7 g n-Dodecylmercaptan
während 50 min zudosiert. Anschließend wurde das Reaktionsgemisch weitere 60 min weitergerührt. Der mittlere Teilchendurchmesser betrug 320 nm.

Danach wurden 2 l der so erhaltenen Polymerdispersion bei 78°C während 6 min unter Rühren zu 4 l einer 0,3 gew.-%igen wäßrigen Calciumformiatlösung gegeben. Dann wurde auf 90°C erhitzt und 30 min gerührt. Der dabei erhaltene koagulierte Latex wurde bei 65°C abfiltriert, mit 3 l vollentsalztem Wasser gewaschen und bei 80°C getrocknet.

### Beispiel 8

### Herstellung eines dreistufigen Pfropfpolymerisates

Es wurde wie in Beispiel 7 beschrieben verfahren mit dem Unterschied, daß als erste Stufe eine Mischung aus
452 g MMA,
113 g Fumarsäuredicyclohexylester,
3 g ALMA,
5 g MA,
565 g vollentsalztem Wasser sowie
6,62 g einer 60 gew.-%igen wäßrigen Dioctylnatrium-sulfosuccinat-Lösung
und als 3. Stufe eine Mischung bestehend aus
654 g MMA,
163 g Fumarsäuredicyclohexylester,
34 g MA sowie
1,7 g n-Dodecylmerkaptan
verwendet wurde.

Der mittlere Teilchendurchmesser betrug 320 nm.

Für die anschließende Qualitätsprüfung wurden Probekörper aus Granulaten gefertigt, die aus 45 Gew.-% eines gemäß der Beispiele 7 und 8 hergestellten Emulsionspolymerisates und aus 55 Gew.-% eines gemäß der Beispiele 5 und 6 hergestellten Copolymerisats durch Compoundierung auf einem Zweiwellen-Extruder (ZSK 25, Werner & Pfleiderer) hergestellt waren.

Zur Qualitätsprüfung der Abmischungen wurden die folgenden Eigenschaften bestimmt:
- Schlagzähigkeit nach DIN 53 453 (bei 23°C)
- Lichtdurchlässigkeit nach DIN 5036 (6 mm)
- Trübung nach DIN 5036 (6 mm)
- Vicat-Erweichungstemperatur nach DIN 53 460 (Methode B/50).

Die Ergebnisse der einzelnen Qualitätsprüfungen sind der nachstehenden Tabelle 3 zu entnehmen.

**Tabelle 3**

| Prüfergebnisse aus Abmischungen der Emulsionspropfcopolymerisate aus den Beispielen 7 und 8 mit den erfindungsgemäßen Copolymerisaten bzw. einer Vergleichsmasse aus Beispiel 6 | | | | | | |
|---|---|---|---|---|---|---|
| Beispiel | Copolymerisat (55 Gew.-%) | Pfropfcopolymer (45 Gew.-%) | Schlagzähigkeit [KJ/m²] | Lichtdurchlässigkeit [%] | Trübung [%] | Vicat-temperatur [°C] |
| 9 | Polymer aus Beispiel 5 | Polymer aus Beispiel 7 | 81 | 91 | 2,4 | 104 |
| 10 | Polymer aus Beispiel 5 | Polymer aus Beispiel 8 | 80 | 91 | 2,2 | 105 |
| zum Vergleich | | | | | | |
| 11 | Polymer aus Beispiel 6 | Polymer aus Beispiel 7 | 80 | 91 | 2,3 | 95 |
| 12 | Polymer aus Beispiel 5 (100 %) | - | 12 | 92 | - | 126 |

Die Beispiele belegen eine Verbesserung gegenüber dem Stand der Technik, wobei zur Verbesserung der Schlagzähigkeit bei einer guten Wärmeformbeständigkeit und einer hohen Transparenz sowohl die erfindungsgemäße Pfropfcopolymere als auch die erfindungsgemäßen Copolymerisate beitragen.

## Patentansprüche

1. Copolymerisate, auf der Basis von
A) 50 bis 94,49 Gew.-% einer Mischung aus
a1) 100 bis 30 Gew.-% Methylmethacrylat und
a2) 0 bis 70 Gew.-% Cyclohexylmethacrylat,
B) 0,5 bis 5 Gew.-% mindestens einer Verbindung, ausgewählt aus der Gruppe bestehend aus C₁-C₄-Alkylacrylaten und C₅-C₈-Cycloalkylacrylaten,
C) 5 bis 30 Gew.-% mindestens einer Verbindung, ausgewählt aus der Gruppe bestehend aus Fumarsäuredi-(C₁-C₆-alkyl)estern, Fumarsäuredi-(C₃-C₈-cycloalkyl)estern und Fumarsäure-C₁-C₆-alkyl-C₃-C₈-cycloalkylestern, in denen die Cycloalkylgruppen jeweils bis zu dreifach mit C₁-C₄-Alkylgruppen substituiert sein können,
D) 0 bis 20 Gew.-% mindestens eines weiteren Comonomeren
und
E) 0,01 bis 2 Gew.-% eines Übertragungsreglers.

2. Verfahren zur Herstellung der Copolymerisate gemäß Anspruch 1, dadurch gekennzeichnet, daß man
A) 50 bis 94,49 Gew.-% einer Mischung aus
a1) 100 bis 30 Gew.-% Methylmethacrylat und
a2) 0 bis 70 Gew.-% Cyclohexylmethacrylat,
B) 0,5 bis 5 Gew.-% mindestens einer Verbindung, ausgewählt aus der Gruppe bestehend aus C₁-C₄-Alkylacrylaten und C₅-C₈-Cycloalkylacrylaten,
C) 5 bis 30 Gew.-% mindestens einer Verbindung, ausgewählt aus der Gruppe bestehend aus Fumarsäuredi-(C₁-C₆-alkyl)estern, Fumarsäuredi-(C₃-C₈-cycloalkyl)estern und Fumarsäure-C₁-C₆-alkyl-C₃-C₈-cycloalkylestern, in denen die Cycloalkylgruppen jeweils bis zu dreifach mit C₁-C₄-Alkylgruppen substituiert sein können,
D) 0 bis 20 Gew.-% mindestens eines weiteren Comonomeren
und
E) 0,01 bis 2 Gew.-% eines Übertragungsreglers
in an sich bekannter Weise der Polymerisation zuführt.

3. Verwendung der Copolymerisate gemäß Anspruch 1 zur Herstellung von Formkörpern.

4. Formkörper aus den Copolymerisaten gemäß Anspruch 1.

5. Thermoplastische Formmassen, enthaltend
10 bis 96 Gew.-% eines Copolymerisats gemäß Anspruch 1
und
4 bis 90 Gew.-% eines Pfropfcopolymerisats.

6. Verfahren zur Herstellung der thermoplastischen Formmassen gemäß Anspruch 5, dadurch gekennzeichnet, daß man
10 bis 96 Gew.-% eines Copolymerisats gemäß Anspruch 1
mit
4 bis 90 Gew.-% eines Pfropfcopolymerisats
mischt.

7. Verwendung der thermoplastischen Formmassen gemäß Anspruch 5 zur Herstellung von Formkörpern.

8. Formkörper, enthaltend thermoplastische Formmassen gemäß Anspruch 5.

## Claims

1. A copolymer based on
A) from 50 to 94.49% by weight of a mixture of
a1) from 100 to 30% by weight of methyl methacrylate and
a2) from 0 to 70% by weight of cyclohexyl methacrylate,
B) from 0.5 to 5% by weight of at least one compound selected from the group consisting of C₁-C₄-alkyl acrylates and C₅-C₈-cycloalkyl acrylates,
C) from 5 to 30% by weight of at least one compound selected from the group consisting of di-C₁-C₆-alkyl fumarates, di-C₃-C₈-cycloalkyl fumarates and C₁-C₆-alkyl C₃-C₈-cycloalkyl fumarates, in which the cycloalkyl groups in each case may be monosubstituted to trisubstituted by C₁-C₄-alkyl groups,
D) from 0 to 20% by weight of at least one further comonomer
and
E) from 0.01 to 2% by weight of a chain transfer agent.

2. A process for the preparation of a copolymer as claimed in claim 1, wherein
A) from 50 to 94.49% by weight of a mixture of
a1) from 100 to 30% by weight of methyl methacrylate and
a2) from 0 to 70% by weight of cyclohexyl methacrylate,
B) from 0.5 to 5% by weight of at least one compound selected from the group consisting of C₁-C₄-alkyl acrylates and C₅-C₈-cycloalkyl acrylates,
C) from 5 to 30% by weight of at least one compound selected from the group consisting of di-C₁-C₆-alkyl fumarates, di-C₃-C₈-cycloalkyl fumarates and C₁-C₆-alkyl C₃-C₈-cycloalkyl fumarates, in which the cycloalkyl groups in each case may be monosubstituted to trisubstituted by C₁-C₄-alkyl groups,
D) from 0 to 20% by weight of at least one further comonomer
and
E) from 0.01 to 2% by weight of a chain transfer agent,
are polymerized in a manner known per se.

3. Use of a copolymer as claimed in claim 1 for the production of moldings.

4. A molding obtained from a copolymer as claimed in claim 1.

5. A thermoplastic molding material containing
from 10 to 96% by weight of a copolymer as claimed in claim 1 and
from 4 to 90% by weight of a graft copolymer.

6. A process for the preparation of a thermoplastic molding material as claimed in claim 5, wherein
from 10 to 96% by weight of a copolymer as claimed in claim 1 is mixed with
from 4 to 90% by weight of a graft copolymer.

7. Use of a thermoplastic molding material as claimed in claim 5 for the production of moldings.

8. A molding containing a thermoplastic molding material as claimed in claim 5.

## Revendications

1. Copolymères à base de
A) 50 à 94,49% en poids d'un mélange de
a1) 100 à 30% en poids de méthacrylate de méthyle et
a2) 0 à 70% en poids de méthacrylate de cyclohexyle,
B) 0,5 à 5% en poids d'au moins un composé choisi dans le groupe constitué par les acrylates d'alkyle en C₁-C₄ et les acrylates de cycloalkyle en C₅-C₈,
C) 5 à 30% en poids d'au moins un composé choisi dans le groupe constitue par les diesters d'alkyle en C₁-C₆ et d'acide fumarique, les diesters de cycloalkyle en C₃-C₈ et d'acide fumarique et les esters d'(alkyle en C₁-C₆)-(cycloalkyle en C₃-C₈) et d'acide fumarique, dans lesquels chacun des groupements cycloalkyle peut être substitué jusqu'à trois fois par des groupements alkyle en C₁-C₄,
D) 0 à 20% en poids d'au moins un autre comonomère et
E) 0,01 à 2% en poids d'un régulateur de transfert.

2. Procédé de préparation des copolymères selon la revendication 1, caractérisé en ce que l'on soumet à la polymérisation, de façon connue en soi,
A) 50 à 94,49% en poids d'un mélange de
a1) 100 à 30% en poids de méthacrylate de méthyle et
a2) a à 70% en poids de méthacrylate de cyclohexyle,
B) 0,5 à 5% en poids d'au moins un composé choisi dans le groupe constitué par les acrylates d'alkyle en C₁-C₄ et les acrylates de cycloalkyle en C₅-C₈,
C) 5 à 30% en poids d'au moins un composé choisi dans le groupe constitué par les diesters d'alkyle en C₁-C₆ et d'acide fumarique, les diesters de cycloalkyle en C₃-C₈ et d'acide fumarique et les esters d'(alkyle en C₁-C₆)-(cycloalkyle en C₃-C₈) et d'acide fumarique, dans lesquels chacun des groupements cycloalkyle peut être substitué jusqu'à trois fois par des groupements alkyle en C₁-C₄,
D) 0 à 20% en poids d'au moins un autre comonomère et
E) 0,01 à 2% en poids d'un régulateur de transfert.

3. Utilisation des copolymères selon la revendication 1 pour la fabrication de corps moulés.

4. Corps moulés en les copolymères selon la revendication 1.

5. Masses à mouler thermoplastiques, contenant
10 à 96% en poids d'un copolymère selon la revendication 1 et
4 à 90% en poids d'un copolymère greffé.

6. Procédé de préparation des masses à mouler thermoplastiques selon la revendication 5, caractérisé en ce que l'on mélange
10 à 96% en poids d'un copolymère selon la revendication 1 avec
4 à 90% en poids d'un copolymère greffé.

7. Utilisation des masses à mouler thermoplastiques selon la revendication 5 pour la fabrication de corps moulés.

8. Corps moulés, contenant des masses à mouler thermoplastiques selon la revendication 5.
